# EUROPEAN PATENT APPLICATION

(11) **EP 4 645 894 A1**
(43) Date of publication of application: **05.11.2025**
(21) Application number: 24750461.6
(22) Date of filing: 17.01.2024
(51) Int. Cl.: H04N 25/704, H04N 25/72, H04N 25/42, H01L 27/146

(54) **IMAGE SENSOR, ELECTRONIC DEVICE COMPRISING IMAGE SENSOR, AND OPERATION METHOD THEREOF**

(30) Priority: 31.01.2023 KR 20230013344; 16.03.2023 KR 20230034791
(71) Applicant: Samsung Electronics Co., Ltd., Suwon-si, Gyeonggi-do 16677 (KR)
(72) Inventor: PARK, Jaehyoung, Suwon-si Gyeonggi-do 16677 (KR); SHIMOKAWA, Shuichi, Suwon-si Gyeonggi-do 16677 (KR); WON, Jonghoon, Suwon-si Gyeonggi-do 16677 (KR)
(74) Representative: Appleyard Lees IP LLP
(86) International application number: PCT/KR2024/000852
(87) International publication number: WO 2024/162659

(57) **Abstract**

An electronic device according to various embodiments may include an image sensor outputting phase data including at least one of first phase information of a first direction and second phase information of a second direction which is different from the first direction, memory storing instructions and at least one processor. The electronic device may output, in a second size, the phase data including first phase data of a first size while the image sensor operates based on a first mode, and output, in the second size, the phase data including second phase data of a third size smaller than the first size and dummy data while operating based on a second mode different from the first mode. Besides, various embodiments are possible.

## Description

### [Technical Field]

The disclosure relates to an image sensor, an electronic device including the image sensor, and an operating method thereof.

### [Background Art]

In a device (e.g., a camera) for capturing a subject, the subject must be precisely focused to acquire a clear image (e.g., a still image or a moving image). The focusing scheme of the device for capturing the subject may be divided into a contrast detection scheme (contrast auto focus) and a phase difference detection scheme (phase auto focus). The contrast detection scheme uses characteristics that an outline of the subject is clear to increase the contrast if the focus is accurate, and conversely, the outline of the subject is blurred to decrease the contrast if the focus is not accurate. The contrast detection scheme may measure the contrast of a specific part of an image formed on an imaging element while moving a lens assembly (e.g., moving forward/backward), and determine that the focus is correct if the contrast is maximum. The phase difference detection scheme is a scheme for measuring a distance of image phases through two images with different incident light obtained by an imaging element (e.g., an image sensor) using a scheme that the phase changes depending on the focus if the incident light of the lens differs in the image. A depth value for a position within the image may be determined based on the phase difference occurring within the two images. In general, it is known that the contrast detection scheme, which detects the focus of the actual image formed on the actual imaging element, has high focusing accuracy but suffers from slow focus detection speed because it measures the contrast of the image after the lens movement (no directivity). By contrast, the phase difference detection scheme is faster than the contrast detection scheme in terms of the focus detection speed by predicting a movement direction of the lens assembly (with directivity), but may be subject to an error since it separately adopts a sensor for the phase difference detection and thus outputs phase data. Hence, a hybrid scheme combining the contrast detection scheme and the phase difference detection scheme is also used.

If the sensor for the phase difference detection is integrated into the imaging element (e.g., a complementary metal-oxide-semiconductor (CMOS) image sensor, a charge-coupled device (CCD) image sensor), fast phase difference auto focus (AF) is possible and the phase difference AF is applied to many cameras.

The foregoing information may be provided as related art for the purpose of aiding understanding of the disclosure. No claim or determination is made as to whether any of the foregoing may be applied as the prior art in connection with the disclosure.

### [Disclosure of Invention]

### [Solution to Problem]

In an embodiment, an electronic device may include an image sensor converting an optical signal into a digital signal, memory storing instructions and at least one processor. The image sensor may include a plurality of micro lenses, a plurality of light receiving elements converting light received through each of the plurality of micro lenses into electrical signals, a calculation unit configured to calculate phase data including at least one of first phase information of a first direction or second phase information of a second direction which is different from the first direction based on the electrical signal obtained through the plurality of light receiving elements, and an interface configured to output phase data including at least one of an image signal obtained through at least one of the plurality of light receiving elements and the calculation unit, the first phase information or the second phase information. The instructions may be executed by the at least one processor, to cause the electronic device to control the image sensor to output the phase data including first phase data of a first size through the interface in a format having a second size while operating based on a first mode. The instructions may be executed by the at least one processor, to cause the electronic device to control the image sensor to output the phase data including second phase data of a third size and dummy data through the interface in a format having the second size while operating based on a second mode which is different from the first mode. The third size may be smaller than the first size.

In an embodiment, an operating method of an electronic device including an image sensor which outputs phase data including at least one of first phase information of a first direction or second phase information of a second direction different from the first direction, may include controlling the image sensor to output the phase data including first phase data of a first size in a format having a second size while operating based on a first mode. The method may include controlling the image sensor to output the phase data including second phase data of a third size and dummy data in a format having a second size while operating based on a second mode which is different from the first mode. The third size may be configured to be smaller than the first size.

In an embodiment, a computer-readable non-transitory recording medium may record a computer program for executing the method described above.

In an embodiment , the image sensor may include a plurality of micro lenses, a plurality of light receiving elements converting light received through each of the plurality of micro lenses into electrical signals, a calculation unit configured to calculate phase data including at least one of first phase information of a first direction or second phase information of a second direction which is different from the first direction based on the electrical signal obtained through the light receiving element, and an interface configured to output phase data including at least one of an image signal obtained through at least one of the light receiving element and the calculation unit, the first phase information or the second phase information. The calculation unit may be configured to output the phase data by adding dummy data corresponding to a reduced size, if the size of at least one of the first phase information or the second phase information included in the phase data is reduced after an operation mode related to an operation of the image sensor is changed.

### [Brief Description of Drawings]

FIG. 1 is a block diagram illustrating an electronic device in a network environment according to various embodiments.
FIG. 2 is a block diagram illustrating the camera module according to various embodiments.
FIG. 3 is a block diagram of an electronic device including an image sensor according to an embodiment.
FIG. 4 is a diagram illustrating at least a part of a configuration of an image sensor according to an embodiment.
FIG. 5 is a diagram conceptually illustrating examples of patterns for arranging color filters, micro lenses, and light receiving elements in an image sensor according to an embodiment.
FIG. 6 is a flowchart illustrating a process of an image sensor included in an electronic device for outputting data according to an embodiment.
FIG. 7 is a diagram conceptually illustrating a structure in which an image sensor outputs image data and first direction phase difference data according to an embodiment.
FIG. 8 is a diagram conceptually illustrating examples of a structure in which dummy data is added to phase difference data according to an embodiment.
FIG. 9 is a diagram conceptually illustrating a structure in which an image sensor outputs image data, first direction phase difference data and second direction phase difference data according to an embodiment.
FIG. 10 is a diagram conceptually illustrating a structure in which an image sensor outputs data including second direction correlation information according to an embodiment.
FIG. 11 is a diagram conceptually illustrating a structure of a data frame outputted by an image sensor according to an embodiment.
FIG. 12 is a diagram conceptually illustrating a structure of a data frame outputted if an image sensor turns off outputting of second direction phase difference data according to an embodiment.
FIG. 13 is a diagram conceptually illustrating a structure of a data frame outputted if an image sensor crops an area in a first direction or performs a binning calculation in the first direction according to an embodiment.
FIG. 14 is a diagram conceptually illustrating a structure of a data frame in which an image sensor inserts dummy data based on a position of an area cropped in a first direction according to an embodiment.
FIG. 15 is a diagram conceptually illustrating a structure of a data frame in which an image sensor inserts dummy data if performing binning in a second direction in addition to the example shown in FIG. 13 according to an embodiment.
FIG. 16 is a diagram conceptually illustrating a structure of a data frame in which an image sensor inserts dummy data inserted if performing binning in a second direction in addition to the example shown in FIG. 14 according to an embodiment.
FIG. 17 is a diagram conceptually illustrating a structure of a data frame in which an image sensor inserts dummy data based on an area further cropped in a second direction in addition to the example shown in FIG. 13 according to an embodiment.
FIG. 18 is a diagram conceptually illustrating a structure of a data frame in which an image sensor inserts dummy data based on an area further cropped in a second direction in addition to the example shown in FIG. 14 according to an embodiment.

### [Mode for the Invention]

Hereinafter, embodiments are described in detail with reference to the attached drawings so that those skilled in the art may easily practice in the technical field to which the present invention belongs. However, the disclosed embodiments may be implemented in various different forms, and are not limited to the embodiments described herein.

In the disclosure, a size of data may indicate a volume required to store or transmit the data. For example, the data size may indicate how many bits the data includes.

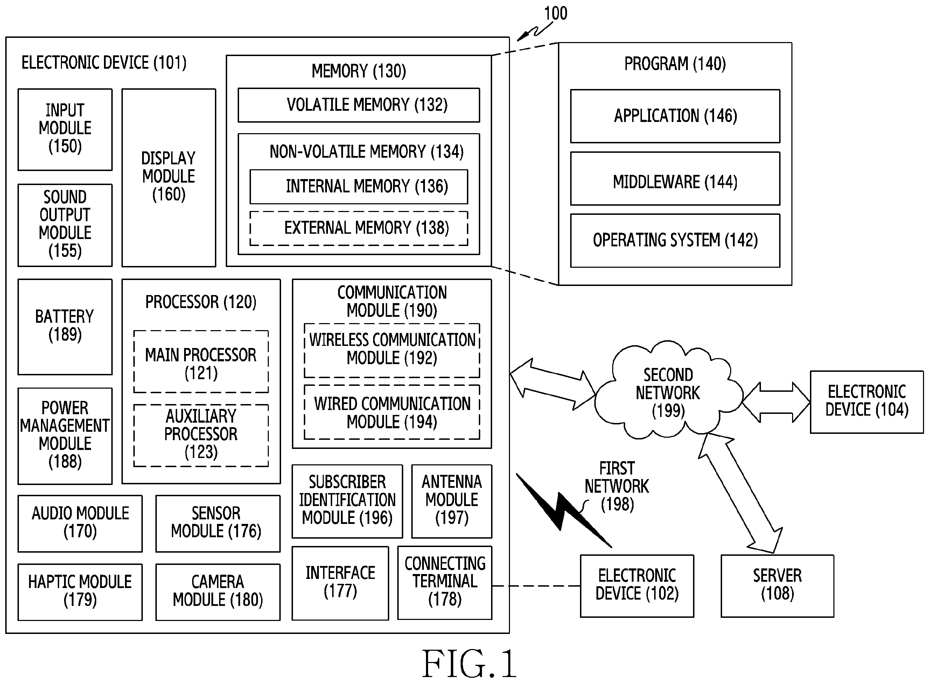

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

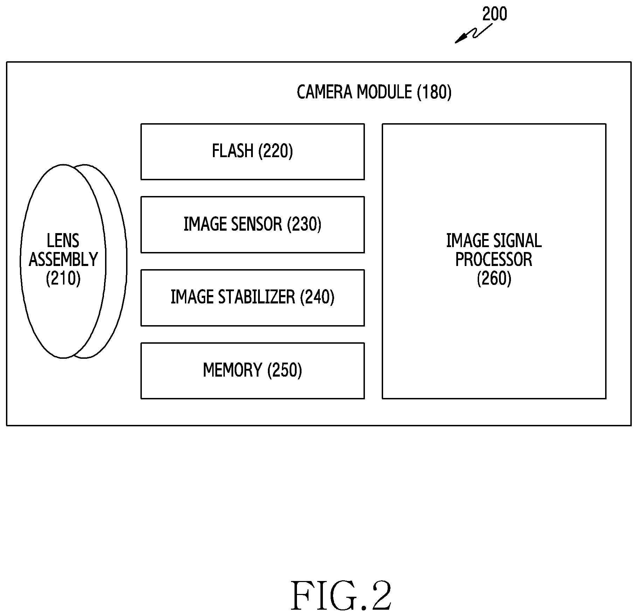

FIG. 2 is a block diagram 200 illustrating a camera module 180 according to various embodiments. Referring to FIG. 2, the camera module 180 may include a lens assembly 210, a flash 220, an image sensor 230, an image stabilizer 240, memory 250 (e.g., buffer memory), or an image signal processor 260. The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, auto-focusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp. The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer. The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display device 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display device 160, the electronic device 102, the electronic device 104, or the server 108) outside the camera module 180. According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display device 160 as it is or after being further processed.

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

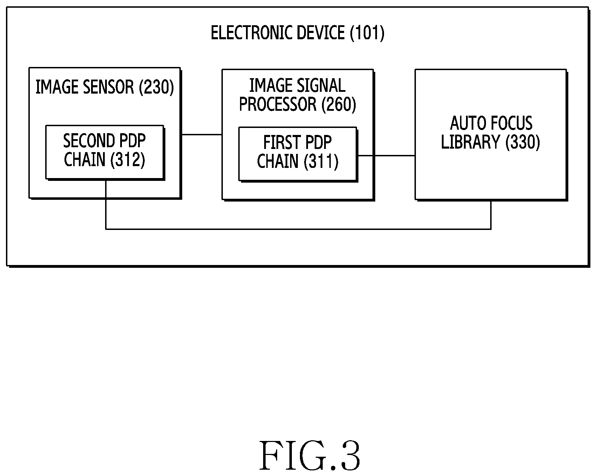

FIG. 3 is a block diagram of an electronic device 101 including an image sensor 230 according to an embodiment.

The electronic device 101 according to an embodiment may include the image sensor 230, an image signal processor 260 and an auto focus library (AF lib) 330. However, the components shown in FIG. 3 are conceptually illustrated to explain an embodiment, and a hardware configuration of the electronic device 101 according to an embodiment may be different from that shown in FIG. 3. For example, the image signal processor 260 and the AF lib 330 may be implemented in an application processor (e.g., the processor 120 of FIG. 1). Alternatively, for example, the electronic device 101 may include more components than the components shown in FIG. 3, or some component may be replaced with a component for performing the same function. For example, the image signal processor 260 may be implemented in the application processor (e.g., the processor 120 of FIG. 1).

In an embodiment, the image signal processor 260 may include a first phase detection processing chain (PDP) 311 for performing phase difference detection. The first phase detection processing chain 311 may output a phase distance by performing a correlation calculation between data detected from a plurality of photodiodes arranged under a micro lens to detect the phase difference. The correlation calculation may include, for example, at least one of a sum of absolute difference (SAD) calculation or a sum of square difference (SSD) calculation. The first phase detection processing chain 311 may perform a calculation on at least one of a first direction phase difference or a second direction phase difference for an array of photodiodes within the image sensor 230. If the first phase detection processing chain 311 is not configured to perform a calculation on the second direction phase difference, separate software may need to be executed to perform a calculation on the second direction phase difference.

Hence, in an embodiment, the image sensor 230 may be configured to output a result of the correlation calculation. According to an embodiment, the image sensor 230 may include a second phase detection processing chain 312 for performing the phase difference detection in a second direction (e.g., a direction substantially perpendicular to a direction (e.g., the first direction) of lines arranged for reading out pixel values of the image sensor 230). For example, the image sensor 230 may be configured to output first AF raw data for the first direction (e.g., a horizontal direction) and second AF raw data for the second direction (e.g., a vertical direction) without the second phase detection processing chain 312, and the first phase detection processing chain 311 may be configured to perform the correlation calculation in the first direction and the correlation calculation in the second direction. However, for example, the image sensor 230 may output second direction correlation data and a first direction luminance value correlated by the second phase detection processing chain 312, and the first phase detection processing chain 311 may perform the first direction correlation calculation. The image sensor 230 may perform at least one image processing (e.g., shading compensation of phase data, gamma correction, image filter application) on the image to allow the second phase detection processing chain 311 to perform the correlation calculation to calculate the phase difference. The at least one image processing may be performed before performing the correlation calculation.

In an embodiment, the image sensor 230 may be connected to the image signal processor 260 through an interface. For example, the image sensor 230 may communicate with the image signal processor 260 using a mobile industry processor interface (MIPI) protocol.

In the disclosure, data for performing the phase difference detection may be referred to as AF raw data. The first AF raw data for the first direction may include first phase information of the first direction. For example, the first AF raw data for the first direction may include LY luminance data and RY luminance data including luminance values respectively acquired by dividing the photodiodes disposed under the micro lens in the first direction. The LY luminance data and the RY luminance data may also be referred to as a first pixel value (or first luminance information) and a second pixel value (or second luminance information) respectively. The second AF raw data for the second direction may include second phase information of the second direction. For example, the second AF raw data for the second direction may include TY luminance data and BY luminance data including luminance values respectively acquired by dividing the photodiodes disposed under the micro lens in the second direction. The TY luminance data and the RY luminance data may also be referred to as a third pixel value (or third luminance information) and a fourth pixel value (or fourth luminance information) respectively.

In an embodiment, the AF lib 330 may be implemented in a hardware abstraction layer (HAL). The AF lib 330 may be configured to transmit a command to at least one of the first phase detection processing chain 311 or the second phase detection processing chain 312. Based on a calculation result of at least one of the first phase detection processing chain 311 or the second phase detection processing chain 312, the AF lib 330 may obtain feedback corresponding to an AF mode. The feedback corresponding to the AF mode may include correlation data for performing the AF.

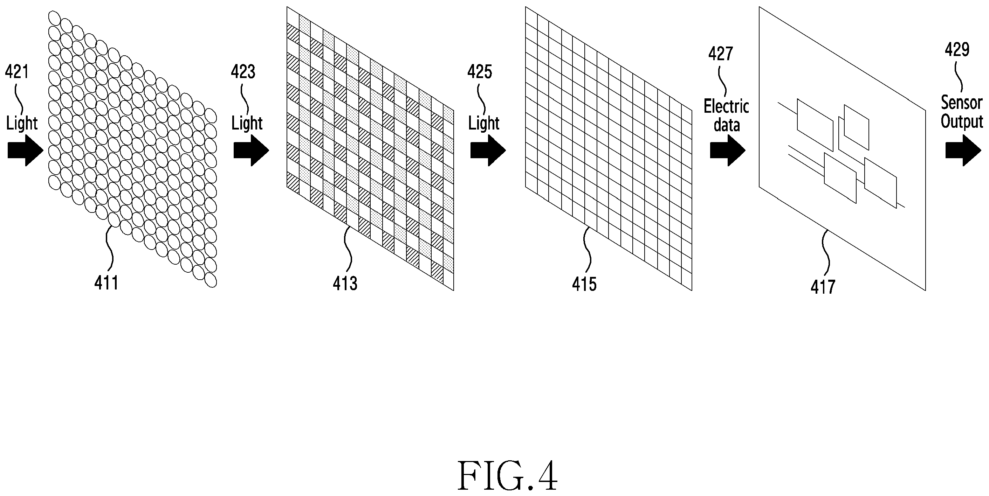

FIG. 4 is a diagram illustrating at least a part of a configuration of an image sensor (e.g., the image sensor 230 of FIG. 2 and FIG. 3) according to an embodiment.

In an embodiment, the image sensor (e.g., the image sensor 230 of FIG. 2 and FIG. 3) may include a micro lens array (MLA) 411, a color filter 413, a light receiving unit 415 and a calculation unit 417.

In an embodiment, the MLA 411 may be configured such that a light bundle 421 which passes through lenses of a lens assembly (e.g., the lens assembly 210 of FIG. 2) and forms an image on the image sensor (e.g., the image sensor 230 of FIG. 2 and FIG. 3) is collected in a light receiving element of the light receiving unit 415. Light bundles 423 passing through the MLA 411 may pass through the color filter 413 and block at least a part of a wavelength other than a band corresponding to a specific color. Light bundles 425 passing through the color filter 413 may be detected by the light receiving element (e.g., a photodiode) of the light receiving unit 415. The light receiving unit 415 may include the light receiving element for, upon receiving the light, generating and converting a charge into an electrical signal, and a circuit for selectively reading out the charge of the light receiving element. A circuit for digitizing a signal read from the light receiving unit 415 or reducing noise may be disposed between the light receiving unit 415 and the calculation unit 417.

In an embodiment, the calculation unit 417 may perform a calculation for processing electrical data 427 outputted from the light receiving unit 415. The calculation unit 417 may output data obtained based on the calculation result. The output of the calculation unit 417 may be the output of the image sensor (e.g., the image sensor 230 of FIG. 2 and FIG. 3). In an embodiment, the calculation unit 417 may calibrate the read data as the calculation for processing the electrical data 427. For example, the calculation performed by the calculation unit 417 may include at least one of a calculation for reducing deviation between pixels due to optical asymmetry or a relative position of a sensor, a calculation for reducing noise generated in an analog signal, a calculation for removing a defect, a calculation for performing remosaic, or a calculation according to a specific application (e.g., a proximity sensor function, a timing adjustment function, a high dynamic range (HDR) tone mapping function, a phase difference correlation calculation function). A sensor output 429 outputted from the calculation unit 417 may be inputted to at least one processor (e.g., an application processor) through an interface.

In an embodiment, the calculation unit 417 may calculate phase data including phase information of the image based on the electrical signal acquired through the light receiving unit 415. The phase information may include at least one of first phase information (e.g., a first pixel value (or first luminance information), and a second pixel value (or second luminance information)) of a first-direction phase, or second phase information (e.g., a third pixel value (or third luminance information), and a fourth pixel value (or fourth luminance information)) of a phase in a second direction different from the first direction.

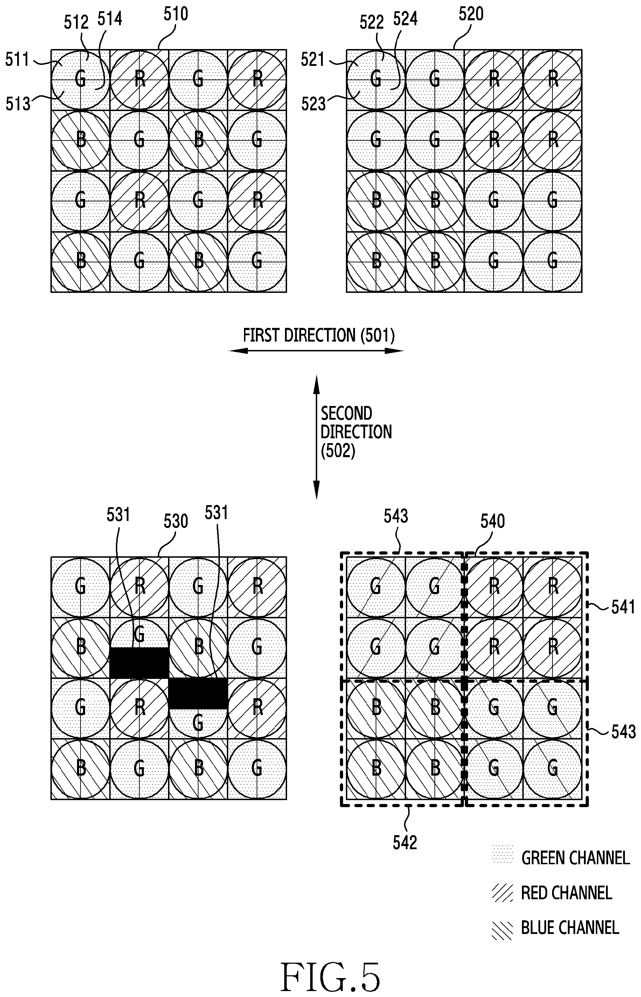

FIG. 5 is a conceptual diagram illustrating examples of patterns for arranging a color filter, micro lenses, and light receiving elements (e.g., photodiodes) in an image sensor (e.g., the image sensor 230 of FIG. 2 and FIG. 3) according to an embodiment.

In an embodiment, based on the patterns shown in FIG. 5, the image sensor (e.g., the image sensor 230 of FIG. 2 and FIG. 3) may obtain phase difference information of the first direction (e.g., the horizontal direction) 501 and phase difference information of the second direction (e.g., the vertical direction) 502. For example, the image sensor (e.g., the image sensor 230 of FIG. 2 and FIG. 3) having a first pattern 510 or a second pattern 520 may obtain a first pixel (L pixel) value based on output values of light receiving elements (e.g., 511, 513 or 521, 523) disposed on one side (e.g., a left side based on the drawing of FIG. 5) in the first direction among four light receiving elements (e.g., 511, 512, 512, 514 or 521, 522, 523, 524) disposed under the micro lens. In addition, the image sensor (e.g., the image sensor 230 of FIG. 2 and FIG. 3) having the first pattern 510 or the second pattern 520 may obtain a second pixel (R pixel) value based on outputs values of light receiving elements (e.g., 512, 514 or 522, 524) disposed on the other side (e.g., a right side based on the drawing of FIG. 5) in the first direction among the four light receiving elements arranged under the micro lens. For example, the first pixel value and the second pixel value may be acquired by merging and outputting the outputs of the light receiving elements in an analog manner during the readout, or by adding the read-out output values in a digital manner. The electronic device (e.g., the electronic device 101 of FIG. 1 and FIG. 3) including the image sensor (e.g., the image sensor 230 of FIG. 2 and FIG. 3) may obtain a phase difference value of the first direction through a correlation calculation of the first pixel value and the second pixel value.

In an embodiment, since a third pattern 530 includes one light receiving element disposed on one side of the first direction and one light receiving element disposed on the other side under the micro lens, the image sensor 230 may output the first pixel value and the second pixel value by excluding or correcting a pixel on which a shielding pattern 531 (e.g., a metal shield pattern) is disposed.

In an embodiment, since a fourth pattern 540 includes one light receiving element disposed on one side and one light receiving element disposed on the other side in the first direction under the micro lenses disposed in a red channel 541 and the blue channel 542, the image sensor 230 may output the outputs of the light receiving elements disposed in the red channel 541 and the blue channel 542 as the first pixel value and the second pixel value respectively. In addition, the image sensor 230 may output the first pixel value and the second pixel value for detecting the phase difference of the first direction 501 or the third pixel value and the fourth pixel value for detecting the phase difference of the second direction 502 by adding or binning pixel values at the same position for a green channel 543.

In an embodiment, the image sensor (e.g., the image sensor 230 of FIG. 2 and FIG. 3) may read out the output values of the light receiving elements based on the first direction 501. Reading out the output values based on the first direction 501 may indicate sequentially reading out values of pixels arranged in a line of the first direction 501 in parallel, and then reading out values of pixels arranged in a next line of the second direction 502 in parallel. Hence, since the pixels disposed at different positions in the second direction 502 are outputted at different timings, it is necessary to store the corresponding pixel values in a memory to simultaneously access the values of those pixels.

In an embodiment, the image sensor (e.g., the image sensor 230 of FIG. 2 and FIG. 3) may obtain the third pixel (T pixel) value from the outputs of the pixels arranged on one side in the second direction (e.g., a direction substantially perpendicular to the first direction) different from the first direction under the micro lens, and obtain the fourth pixel (B pixel) value from the outputs of the pixels arranged on the other side in the second direction.

In an embodiment, the image sensor (e.g., the image sensor 230 of FIG. 2 and FIG. 3) may add and output a plurality of pixel values to reduce the data size if outputting raw data (e.g., the first pixel value, the second pixel value, the third pixel value, and the fourth pixel value) for the phase difference calculation. In an embodiment, the raw data for the phase difference calculation may be outputted by converting into a luminance component value Y (e.g., a Y value excluding color information from a YUV color value) to reduce influence due to the color. Data related to the phase difference may be outputted as data for one image frame together with image data including pixel values constituting the image.

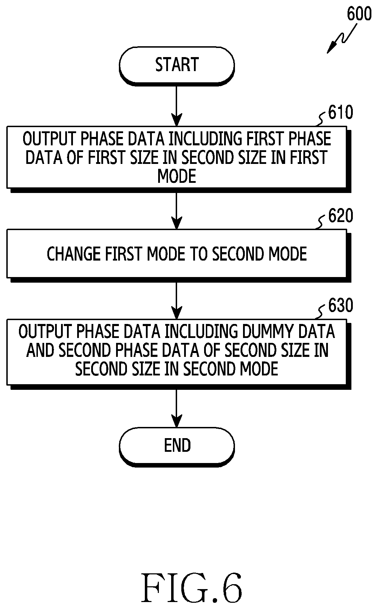

FIG. 6 is a flowchart 600 illustrating a process in which an image sensor (e.g., the image sensor 230 of FIG. 2 and FIG. 3) included in an electronic device (e.g., the electronic device 101 of FIG. 1 and FIG. 3) outputs data according to an embodiment.

In the disclosure, it may be understood that the operation of the electronic device (e.g., the electronic device 101 of FIG. 1 and FIG. 3) is performed by a processor (e.g., the processor 120 of FIG. 1) by executing instructions stored in a memory (e.g., the memory 130 of FIG. 1).

In an embodiment, the image sensor (e.g., the image sensor 230 of FIG. 2 and FIG. 3) may operate based on a plurality of operation modes. For example, the image sensor (e.g., the image sensor 230 of FIG. 2 and FIG. 3) may operate based on a first mode. Alternatively, the image sensor (e.g., the image sensor 230 of FIG. 2 and FIG. 3) may operate based on a second mode which is different from the first mode. The second mode may indicate that, for example, a region of interest (ROI) is changed for a camera (e.g., the camera module 180 of FIG. 1) including the image sensor (e.g., the image sensor 230 of FIG. 2 and FIG. 3) in the first mode, a user setting is changed, or an AF data position or size is changed based on turning off a stream for outputting the phase difference data of the second direction.

For example, the first mode may indicate an operation mode in which the image sensor (e.g., the image sensor 230 of FIG. 2 and FIG. 3) outputs the phase data including the phase information acquired through a phase detection processing chain (e.g., the second phase detection processing chain 312 of FIG. 3). For example, the second mode may indicate a mode in which the image sensor (e.g., the image sensor 230 of FIG. 2 and FIG. 3) operates by disabling the phase detection processing chain (e.g., the second phase detection processing chain 312 of FIG. 3).

For example, the second mode may indicate an operation mode for cropping an area to be applied with the AF function and performing the phase difference calculation on a narrower area compared to the first mode. For example, in the second mode, the image sensor (e.g., the image sensor 230 of FIG. 2 and FIG. 3) may crop an image and output image data and phase difference data with a resolution corresponding to the resolution of the image data outputted in the first mode.

According to an embodiment, in operation 610, the electronic device (e.g., the electronic device 101 of FIG. 1 and FIG. 3) may control the image sensor (e.g., the image sensor 230 of FIG. 2 and FIG. 3) to operate based on the first mode. In the first mode, the image sensor (e.g., the image sensor 230 of FIG. 2 and FIG. 3) may output phase data including first phase data of a first size in a second size. The first phase data may indicate data related to the phase difference outputted by the image sensor (e.g., the image sensor 230 of FIG. 2 and FIG. 3) before a setting for operating the image sensor (e.g., the image sensor 230 of FIG. 2 and FIG. 3) is changed (the first mode). The first phase data may include at least one of the first phase information or the second phase information. The first phase information may include information related to the phase difference of the first direction. For example, the first phase information may include first luminance information and second luminance information for the first direction. The second phase information may include information related to the phase difference of the second direction. For example, the second phase information may include a result of the correlation calculation performed on the third luminance information and the fourth luminance information for the second direction. The second size may indicate 4080* 10 bits for an image having the resolution of a length (e.g., 12.5 mega pixels (Mp)) of phase data outputted as a single line within an image frame outputted by the image sensor (e.g., the image sensor 230 of FIG. 2 and FIG. 3). The first size may indicate a length of the first phase data within the phase data outputted as a single line within the image frame outputted by the image sensor (e.g., the image sensor 230 of FIG. 2 and FIG. 3). The second size may correspond to, for example, a width (e.g., a horizontal width of the image) of the image data outputted as a single line within the image frame. However, the second size is not limited to the width of the image data. The second size may correspond to the length of the most data among the sizes of the phase data outputted in various modes. To maintain the size between the image frames, it is necessary to maintain the second size in which the phase data is outputted. Herein, the first size may be the same as the second size, but is not limited thereto. For example, the first size may be smaller than the second size.

In an embodiment, in operation 620, the electronic device (e.g., the electronic device 101 of FIG. 1 and FIG. 3) may change the operation mode of the image sensor (e.g., the image sensor 230 of FIG. 2 and FIG. 3) from the first mode to the second mode. For example, the electronic device (e.g., the electronic device 101 of FIG. 1 and FIG. 3) may change the operation mode of the image sensor (e.g., the image sensor 230 of FIG. 2 and FIG. 3) from the first mode to the second mode by deactivating the phase detection processing chain (e.g., the second phase detection processing chain 312 of FIG. 3) which computes the correlation data of the second direction. For example, the electronic device (e.g., the electronic device 101 of FIG. 1 and FIG. 3) may crop the area to be applied with the AF function based on a user input for changing a zoom magnification, or a user input for setting an area to focus on. The electronic device (e.g., the electronic device 101 of FIG. 1 and FIG. 3) may change the operation mode of the image sensor (e.g., the image sensor 230 of FIG. 2 and FIG. 3) to the second mode for outputting the phase data of the cropped area. Cropping the area to be applied with the AF function may include at least one of a horizontal crop operation for setting an area corresponding to the width of the first direction (e.g., the horizontal direction) or a vertical crop operation for setting an area corresponding to the width of the second direction (e.g., the vertical direction).

In an embodiment, if the size of the phase data changes while switching from the first mode to the second mode and the data size (or length) within the outputted data frame changes, the image sensor (e.g., the image sensor 230 of FIG. 2 and FIG. 3) according to an embodiment may turn off the image data stream outputted from the image sensor and then output the data again. However, if the electronic device (e.g., the electronic device 101 of FIG. 1 and FIG. 3) maintains the size of the phase data, the image sensor (e.g., the image sensor 230 of FIG. 2 and FIG. 3) may keep outputting the image data stream.

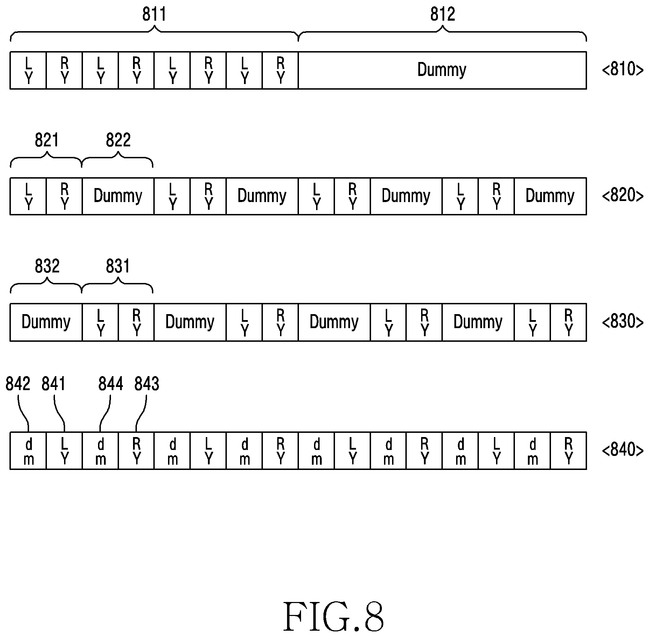

According to an embodiment, in operation 630, the electronic device (e.g., the electronic device 101 of FIG. 1 and FIG. 3) may control the image sensor (e.g., the image sensor 230 of FIG. 2 and FIG. 3) to operate based on the second mode. In the second mode, the image sensor (e.g., the image sensor 230 of FIG. 2 and FIG. 3) may output phase data including second phase data of a third size. The third size may be smaller than the first size. If the second mode is an operation mode for disabling the phase detection processing chain (e.g., the second phase detection processing chain 312 of FIG. 3) which computes the correlation data of the second direction, the third size may be 0. If the second phase data of the third size is outputted as it is, it may be different from the size of the phase data outputted in the first mode. Hence, the image sensor (e.g., the image sensor 230 of FIG. 2 and FIG. 3) according to an embodiment may add dummy data corresponding to the difference between the first size and the third size. The image sensor (e.g., the image sensor 230 of FIG. 2 and FIG. 3) may output the phase data in the second size by outputting the phase data including the dummy data and the phase data of the third size. A method for adding the dummy data shall be described with reference to an example shown in FIG. 8.

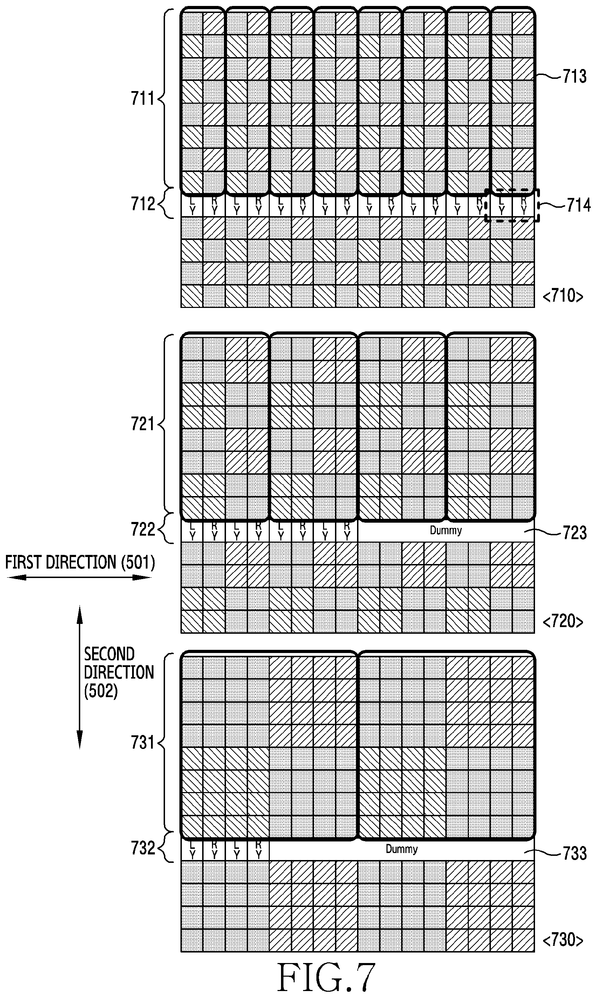

FIG. 7 is a diagram conceptually illustrating a structure in which an image sensor (e.g., the image sensor 230 of FIG. 2 and FIG. 3) outputs image data and first direction phase difference data according to an embodiment. For example, FIG. 7 illustrates an example of a structure of the data outputted according to the resolution by the image sensor (e.g., the image sensor 230 of FIG. 2 and FIG. 3) having the second pattern 520 of FIG. 5.

In an embodiment, referring to 710 of FIG. 7, the image sensor (e.g., the image sensor 230 of FIG. 2 and FIG. 3) may output image data 711 of a first resolution (e.g., 12.5 Mp) based on a result of adding output values of light receiving elements of a 4x4 array. Referring to FIG. 7, the image sensor (e.g., the image sensor 230 of FIG. 2 and FIG. 3) may output a frame of an image having a structure which includes phase data 712 after outputting the image data 711 of eight lines. The phase data 712 may include a first pixel (LY) value - second pixel (RY) value pair 714 for a patch 713 including pixels of an 8x2 array. The electronic device (e.g., the electronic device 101 of FIG. 1 and FIG. 3) may obtain phase difference information of the first direction 501 based on the phase data 712.

In an embodiment, referring to 720 of FIG. 7, the image sensor (e.g., the image sensor 230 of FIG. 2 and FIG. 3) may output image data 721 based on a second resolution (e.g., 50 Mp) based on a result of adding output values of light receiving elements of a 2x2 array. The image sensor (e.g., the image sensor 230 of FIG. 2 and FIG. 3) may crop the image of the second resolution to output an image frame including phase data 722 together with the image data 721 of the first resolution. The phase data 722 may include a first pixel (LY) value - second pixel value (RY) pair for a patch including pixels of an 8x4 array. Compared to the case shown in 710 of FIG. 7, the data amount of the first pixel (LY) value - second pixel value (RY) pair included in the phase data 722 is reduced to half of the size of the first direction 501 of the image data 721. Hence, the image sensor (e.g., the image sensor 230 of FIG. 2 and FIG. 3) may output the phase data 722 by further including dummy data 723 for maintaining the size of the phase data 722. In 720 of FIG. 7, while the image data 721 is illustrated as having the different pattern from the Bayer pattern, the image sensor (e.g., the image sensor 230 of FIG. 2 and FIG. 3) may output the image data 721 by converting into the Bayer pattern.

In an embodiment, referring to 730 of FIG. 7, the image sensor (e.g., the image sensor 230 of FIG. 2 and FIG. 3) may output image data 731 based on a third resolution (e.g., 200 Mp). The image sensor (e.g., the image sensor 230 of FIG. 2 and FIG. 3) may crop an image of the third resolution and thus output an image frame including phase data 732 together with the image data 731 of the first resolution. The phase data 732 may include a first pixel (LY) value - second pixel value (RY) pair for a patch including pixels of an 8x8 array. Accordingly, the data amount of the first pixel (LY) value - second pixel value (RY) pair included in the phase data 732 is reduced to 1/4 of the size of the first direction 501 of the image data 731. Hence, the image sensor (e.g., the image sensor 230 of FIG. 2 and FIG. 3) may output the phase data 732 by further including dummy data 733 for maintaining the size of the phase data 732. In 730 of FIG. 7, while the image data 731 is illustrated as having the different pattern from the Bayer pattern, the image sensor (e.g., the image sensor 230 of FIG. 2 and FIG. 3) may also output the image data 731 by converting into the Bayer pattern.

In the examples shown in 710, 720, and 730 of FIG. 7, the number of the pixels included in the data outputted from the image sensor (e.g., the image sensor 230 of FIG. 2 and FIG. 3) may be identical. The image represented by the data outputted in 710 of FIG. 7 may be for a scene included in a wider angle of view than the image represented by the data outputted from 720 of FIG. 7. The image represented by the data outputted from 720 of FIG. 7 may be for a scene included in a wider angle of view than the image represented by the data outputted from 730 of FIG. 7. If transitioning from the state shown in 710 of FIG. 7 to the state shown in 720 of FIG. 7, or transitioning from the state shown in 720 of FIG. 7 to the state shown in 730 of FIG. 7, a crop zoom may be performed. Seamless transition may be achieved while performing the crop zoom.

FIG. 8 is a diagram conceptually illustrating examples of a structure in which dummy data is added to phase difference data according to an embodiment.

In an embodiment, referring to 810 of FIG. 8, the image sensor (e.g., the image sensor 230 of FIG. 2 and FIG. 3) may add dummy data 812 after all of first pixel (LY) values and second pixel values (RY) 811 (or third pixel (TY) values and fourth pixel (BY) values) included in one line.

In an embodiment, referring to 820 of FIG. 8, by adding dummy data 822 after a first pixel (LY) value - second pixel value (RY) pair 821 (or a third pixel (TY) value - fourth pixel (BY) value pair), the image sensor (e.g., the image sensor 230 of FIG. 2 and FIG. 3) may alternately output data (the first pixel (LY) value - the second pixel value (RY) pair) including the phase information and the dummy data.

In an embodiment, referring to 830 of FIG. 8, by adding a first pixel (LY) value - second pixel value (RY) pair 831 (or a third pixel (TY) - fourth pixel (BY) value pair) after dummy data 832, the image sensor (e.g., the image sensor 230 of FIG. 2 and FIG. 3) may alternately output data (the first pixel (LY) value - second pixel value (RY) pair) including the phase information and the dummy data.

In an embodiment, referring to 840 of FIG. 8, a first pixel (LY) value 841 (or the third pixel (TY) value) may be outputted after dummy data 842, and dummy data 844 and a second pixel (RY) value 843 (or the fourth pixel (BY) value) may be outputted in sequence. If the dummy data 842, 844 are padded with 0, the first pixel (LY) and the second pixel (RY) may be regarded as pixels having a bit width twice that of the existing one.

However, the structure shown in FIG. 8 is merely an example, and the dummy data may be added to have a different structure from the structure shown in FIG. 8.

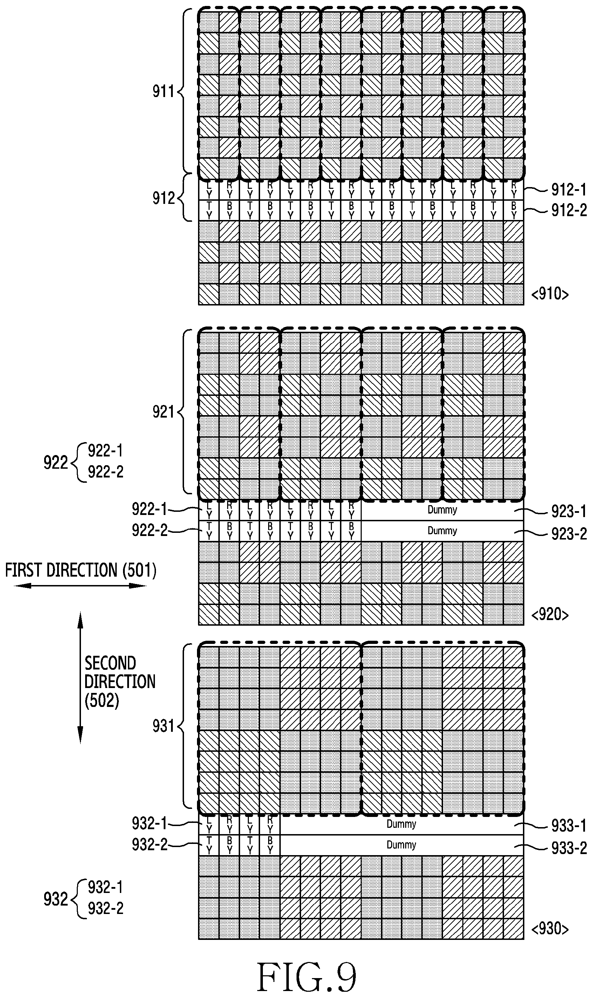

FIG. 9 is a diagram conceptually illustrating a structure in which an image sensor (e.g., the image sensor 230 of FIG. 2 and FIG. 3) according to an embodiment outputs image data, first direction phase difference data and second direction phase difference data. In particular, FIG. 9 illustrates an example of the structure of the data outputted according to the resolution by the image sensor (e.g., the image sensor 230 of FIG. 2 and FIG. 3) having the second pattern 520 of FIG. 5.

In an embodiment, referring to 910 of FIG. 9, the image sensor (e.g., the image sensor 230 of FIG. 2 and FIG. 3) may output image data 911 of a first resolution (e.g., 12.5 Mp) based on a result of adding output values of light receiving elements of a 4x4 array. Referring to FIG. 9, the image sensor (e.g., the image sensor 230 of FIG. 2 and FIG. 3) may output an image frame having a structure including phase data 912 after outputting the image data 911 of eight lines in the operation mode corresponding to the first resolution. The phase data 912 may include first raw data 912-1 related to first phase information of the first direction 501 and second raw data 912-2 related to second phase information of the second direction 502. The first raw data 912-1 may include a first pixel (LY) value - second pixel (RY) value pair for a patch including pixels of an 8x2 array. The second raw data 912-2 may include a third pixel (TY) value - fourth pixel (BY) value pair for a patch including pixels of an 8x2 array. The electronic device (e.g., the electronic device 101 of FIG. 1 and FIG. 3) may obtain information of the phase difference of the first direction 501 and information of the phase difference of the second direction 502 based on the phase data 912.

In an embodiment, referring to 920 of FIG. 9, the image sensor (e.g., the image sensor 230 of FIG. 2 and FIG. 3) may output image data 921 of a second resolution (e.g., 50 Mp) based on a result of adding outputs of light receiving elements of a 2x2 array. Referring to FIG. 9, the image sensor (e.g., the image sensor 230 of FIG. 2 and FIG. 3) may output an image frame having a structure in which phase data 922 is included after the image data 921 of eight lines in the operation mode corresponding to the first resolution by cropping the second resolution. The phase data 922 may include first raw data 922-1 related to the first phase information of the first direction 501 and second raw data 922-2 related to the second phase information of the second direction 502. The first raw data 922-1 may include dummy data 923-1 for maintaining the size of the data. The second raw data 922-2 may include dummy data 923-2 for maintaining the size of the data. In 920 of FIG. 9, the image data 921 is illustrated as having the different pattern from the Bayer pattern, but the image sensor (e.g., the image sensor 230 of FIG. 2 and FIG. 3) may output the image data 921 by converting into the Bayer pattern.

In an embodiment, referring to 930 of FIG. 9, the image sensor (e.g., the image sensor 230 of FIG. 2 and FIG. 3) may output image data 931 of a third resolution (e.g., 200 Mp). Referring to FIG. 9, the image sensor (e.g., the image sensor of FIG. 2 and FIG. 3) may output an image frame having a structure in which phase data 932 is included after the image data 931 of eight lines in the operation mode corresponding to the first resolution by cropping the third resolution. The phase data 932 may include first raw data 932-1 related to the first phase information of the first direction 501 and second raw data 932-2 related to the second phase information of the second direction 502. The first raw data 932-1 may include dummy data 933-1 for maintaining the size of the data. The second raw data 932-2 may include dummy data 933-2 for maintaining the size of the data. In 930 of FIG. 9, the image data 931 is illustrated as having the different pattern from the Bayer pattern, but the image sensor (e.g., the image sensor 230 of FIG. 2 and FIG. 3) may output the image data 931 by converting into the Bayer pattern.

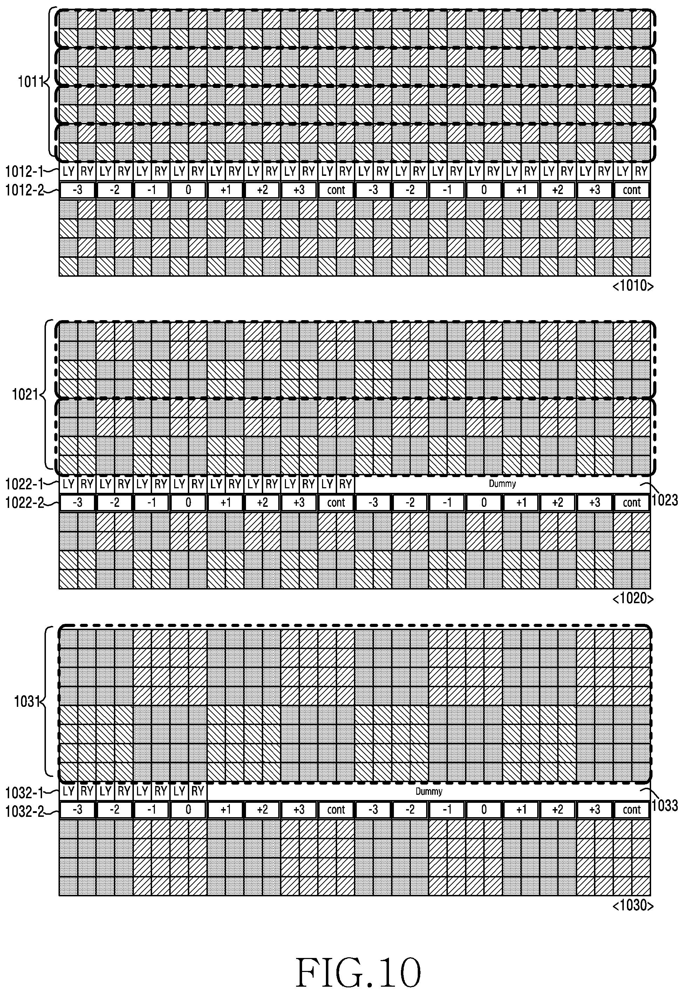

FIG. 10 is a diagram conceptually illustrating a structure in which an image sensor (e.g., the image sensor 230 of FIG. 2 and FIG. 3) outputs data including second direction correlation information according to an embodiment. For example, FIG. 10 illustrates an example of the structure of the data outputted according to the resolution by the image sensor (e.g., the image sensor 230 of FIG. 2 and FIG. 3) having the second pattern 520 of FIG. 5.

In an embodiment, the image sensor (e.g., the image sensor 230 of FIG. 2 and FIG. 3) may obtain correlation information based on raw data related to phase information. For example, the image sensor (e.g., the image sensor 230 of FIG. 2 and FIG. 3) may perform a correlation calculation on second raw data related to the phase information of the second direction 502 through the second phase detection processing chain 312.

In an embodiment, referring to 1010 of FIG. 10, the image sensor (e.g., the image sensor 230 of FIG. 2 and FIG. 3) may output image data 1011 of a first resolution (e.g., 12.5 Mp) based on a result of adding output values of light receiving elements of a 4x4 array. Referring to FIG. 10, the image sensor (e.g., the image sensor 230 of FIG. 2 and FIG. 3) may output an image frame including phase data which includes first raw data 1012-1 related to the first phase information of the first direction 501 and correlation data 1012-2 related to the second phase information of the second direction 502 after the image data 1011 in a mode corresponding to the first resolution.

In an embodiment, the correlation data 1012-2 may include a sum of absolute differences (or square differences) calculated while performing pixel shift with multiple values (e.g., -3 ~ +3) for the third pixel value and the fourth pixel value. For example, the sum of absolute differences (or square differences) calculated while performing the pixel shift with the multiple values (e.g., -3 ~ +3) may be referred to as a phase shift difference value. In an embodiment, the correlation data 1012-2 may further include additional information. For example, the additional information may include at least one of information related to a pixel shift value having the smallest sum of absolute differences (or square differences) among the pixel shift values, a contrast value of the ROI, or information relating to presence or absence of a saturated pixel. The phase shift difference value, which is typically greater than the data size (e.g., 10 bits, 12 bits) representing one pixel, may be included in the correlation data 1012-2 with a length corresponding to two pixels as shown in FIG. 10. The correlation data 1012-2 may output a plurality of sets of the phase shift difference values and the additional information based on different filter coefficients. In this case, the correlation data 1012-2 may have a size corresponding to the data size representing 32 pixels or 48 pixels, for example.

By contrast, referring to 1020 of FIG. 10, the image sensor (e.g., the image sensor 230 of FIG. 2 and FIG. 3) may crop the second resolution (e.g., 50 Mp) based on the result of adding the outputs of the light receiving elements of the 2x2 array and thus output the image data 1021 of the first resolution. The image sensor (e.g., the image sensor 230 of FIG. 2 and FIG. 3) may output an image frame including first raw data 1022-1 related to the first phase information of the first direction 501 and correlation data 1022-2 related to the second phase information of the second direction 502 after the image data 1021. Herein, the size of the correlation data 1022-2 is the same as the size of the correlation data 1012-2 shown in 1010 of FIG. 10, but dummy data 1023 may be added because the size of the first raw data 1022-1 reduces.

Referring to 1030 of FIG. 10, the image sensor (e.g., the image sensor 230 of FIG. 2 and FIG. 3) may output image data 1031 of the first resolution by cropping the third resolution (e.g., 200 Mp). The image sensor (e.g., the image sensor 230 of FIG. 2 and FIG. 3) may output first raw data 1032-1 related to the first phase information of the first direction 501 and correlation data 1032-2 related to the second phase information of the second direction 502 after the image data 1031. The size of the correlation data 1032-2 related to the second phase information is the same as the size of the correlation data 1012-2 and 1022-2 shown in 1010 and 1020 of FIG. 10, but the dummy data 1033 may be added because the size of the first raw data 1032-1 reduces.

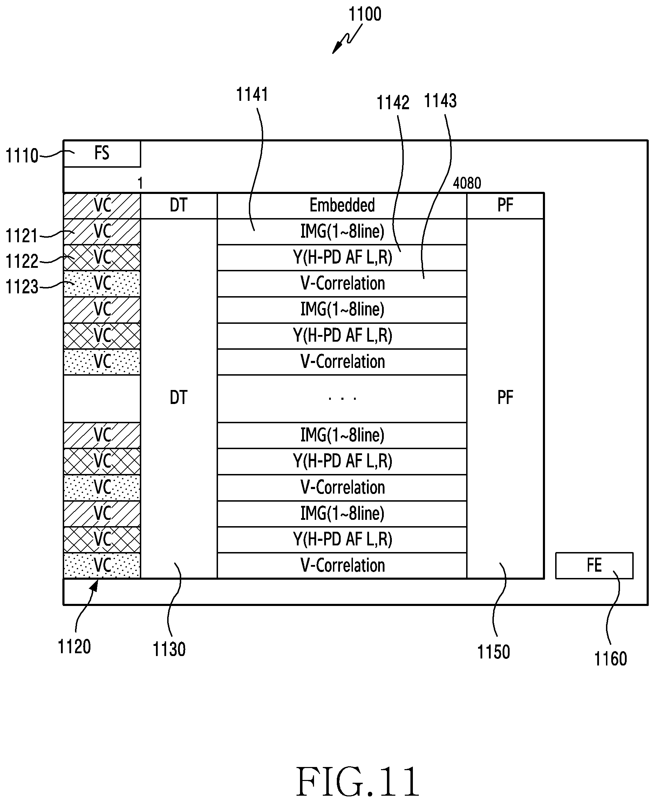

FIG. 11 is a diagram conceptually illustrating a structure of a data frame 1100 outputted by an image sensor (e.g., the image sensor 230 of FIG. 2 and FIG. 3) according to an embodiment.

In an embodiment, the data frame 1100 outputted by the image sensor (e.g., the image sensor 230 of FIG. 2 and FIG. 3) may include a frame start (FS) 1110 indicating the start of the frame and a frame end (FE) 1160 indicating the end of the frame. The FS 1110 and the FE 1160 may be encoded data contained in the frame 1100 or may be specific states (e.g., specific voltage values).

In an embodiment, the data frame 1100 may include data type (DT) information 1130 for identifying a type of content of the data outputted from the image sensor (e.g., the image sensor 230 of FIG. 2 and FIG. 3) in a line header of the data lines. The data frame 1100 may include a packet footer (PF) 1150 positioned at the end of the data line. The data frame 1100 may include a virtual channel (VC) 1120 positioned before the data type information 1130. A processor (e.g., an application processor) receiving the image frame 1100 may include a plurality of chains for processing the image frame 1100. The plurality of chains may be classified into channels. The processor receiving the image frame 1100 may classify data based on the virtual channel 1120 and apply different processing according to the classification. The channel for processing data within the image frame 1100 may be outputted separately at the time of the outputting from the image sensor (e.g., the image sensor 230 of FIG. 2 and FIG. 3).

The image frame 1100 may include image data 1141, first phase data 1142 for calculating the first phase information of the first direction, and correlation data 1143 representing the second phase information of the second direction. The image data 1141, the first phase data 1142, and the correlation data 1143 may be classified into different virtual channels (e.g., an image data channel 1121, a first direction phase difference data channel 1122, and a second direction phase difference data channel 1123 of FIG. 11) respectively. While the image data 1141 is illustrated as one line in FIG. 11, the image data 1141 may be including eight lines.

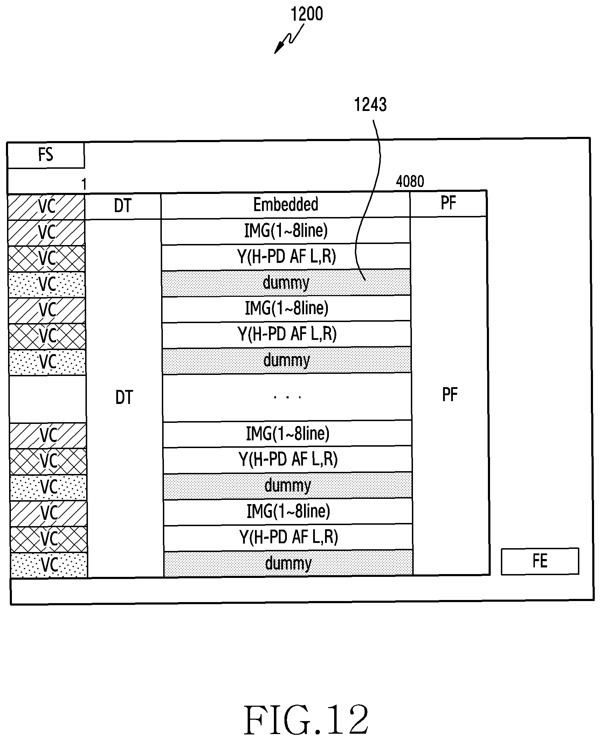

FIG. 12 is a diagram conceptually illustrating a structure of a data frame 1200 outputted if an image sensor (e.g., the image sensor 230 of FIG. 2 and FIG. 3) turns off outputting of second direction phase difference data according to an embodiment.

For example, the electronic device (e.g., the electronic device 101 of FIG. 1 and FIG. 3) may deactivate the second phase detection processing chain 312. If the second phase detection processing chain 312 is deactivated, the correlation data 1143 of FIG. 11 may not be outputted. If the correlation data 1143 is removed, the structure of the data frame 1100 of FIG. 11 is changed, and accordingly the processor may not normally process the data frame 1100. In an embodiment, the electronic device (e.g., the electronic device 101 of FIG. 1 and FIG. 3) may output dummy data 1243 in place of the correlation data 1143.

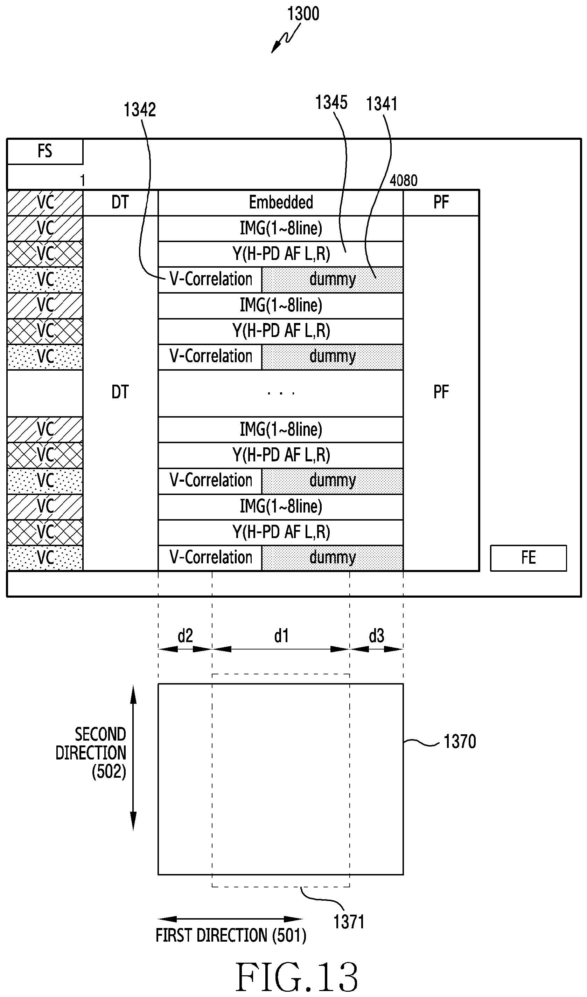

FIG. 13 is a diagram conceptually illustrating a structure of a data frame 1300 outputted by an image sensor (e.g., the image sensor 230 of FIG. 2 and FIG. 3) if cropping an area in a first direction 501 or performing a binning calculation in the first direction 501 according to an embodiment.

In an embodiment, the electronic device (e.g., the electronic device 101 of FIG. 1 and FIG. 3) may crop an area 1371 (e.g., an ROI) on which the phase difference calculation is to be performed within an image 1370 in the first direction 501. For example, cropping in the first direction 501 may indicate operating to perform the AF function through the phase difference calculation on the area 1371 of a width d1 excluding a width d2 and a width d3 within the image 1370 in the first direction 501.

In an embodiment, if the phase difference calculation is performed on the area 1371 cropped in the first direction 501, correlation data 1342 of a smaller size than the correlation data 1143 of FIG. 11 may be outputted. The image sensor (e.g., the image sensor 230 of FIG. 2 and FIG. 3) according to an embodiment may output the data frame 1300 including the correlation data 1342 and dummy data 1341. The correlation data 1342 of the second direction 502 may be acquired within the cropped area, and phase data 1345 of the first direction 501 may be acquired from the entire region. In an embodiment, even if the phase data of the second direction 502 is outputted rather than the correlation data 1342, the dummy data may be included.

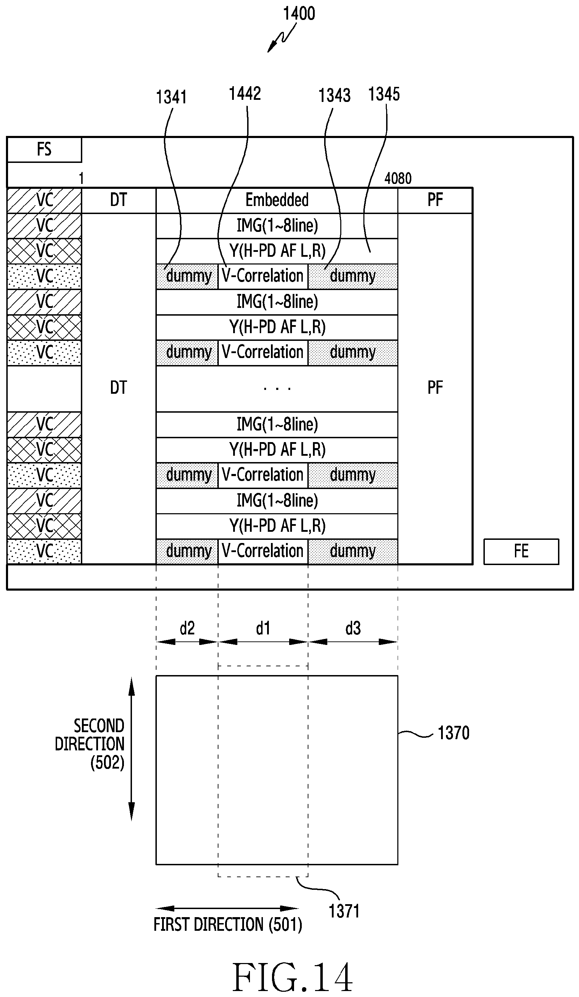

FIG. 14 is a diagram conceptually illustrating a structure of a data frame 1400 in which an image sensor (e.g., the image sensor 230 of FIG. 2 and FIG. 3) inserts dummy data based on a position of an area cropped in a first direction 501 according to an embodiment.

The image sensor (e.g., the image sensor 230 of FIG. 2 and FIG. 3) according to an embodiment may output correlation data 1442 based on a position of a cropped area 1371 in the first direction 501. For example, the image sensor (e.g., the image sensor 230 of FIG. 2 and FIG. 3) may output the correlation data 1442 after first dummy data 1341 having a size corresponding to the width d2. The image sensor (e.g., the image sensor 230 of FIG. 2 and FIG. 3) may output second dummy data 1343 after the correlation data 1442. In an embodiment, the dummy data may be also included even if the phase data of the second direction 502 is outputted rather than the correlation data 1442.

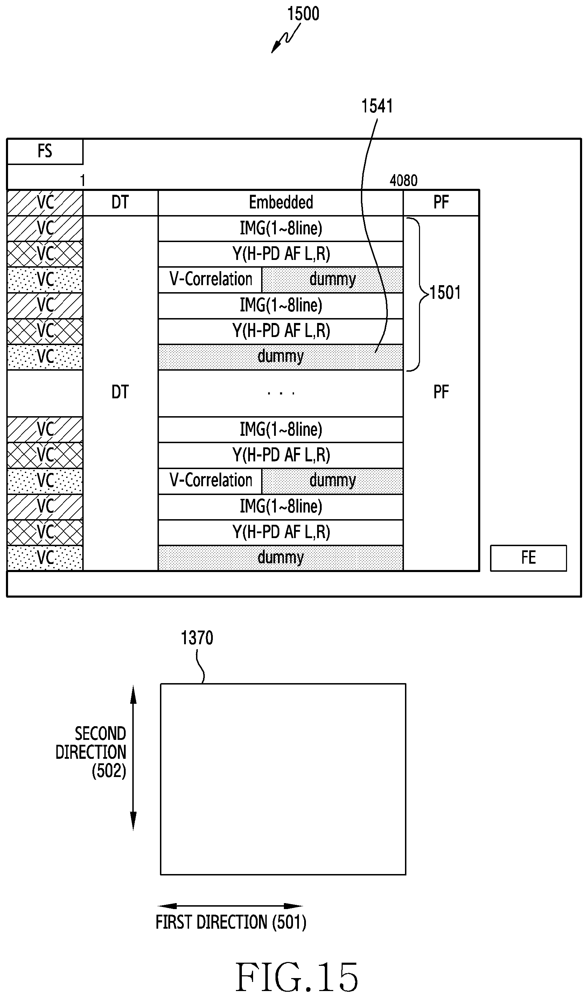

FIG. 15 is a diagram conceptually illustrating a structure of a data frame 1500 in which an image sensor (e.g., the image sensor 230 of FIG. 2 and FIG. 3) inserts dummy data based on a result of further performing a binning calculation of a second direction 502 in addition to the example in FIG. 13 according to an embodiment. In particular, FIG. 15 relates to a case in which the image 1370 is cropped in the first direction 501 and the binning calculation is further conducted in the second direction 502 as shown in FIG. 13.

In an embodiment, if the image frame is outputted by performing the binning calculation on the image 1370 in the second direction 502, the number of results obtained through the correlation calculation is reduced. Hence, in an embodiment, the image sensor (e.g., the image sensor 230 of FIG. 2 and FIG. 3) may output the data frame 1500 including dummy data 1541 corresponding to the reduced correlation data.

In an embodiment, line dummy data 1541 may be included in a data line which does not output correlation data through the binning calculation. Referring to FIG. 15, if the binning calculation of the second direction 502 is performed, the dummy data 1541 may be included in the data line for the virtual channel 1123 for outputting the phase difference data of the second direction 502. If the binning calculation is performed on the pixels of the second direction 502, lines having no correlation data are repeated and accordingly the form of a set of lines 1501 shown in FIG. 15 may be repeatedly included in the data frame 1500.

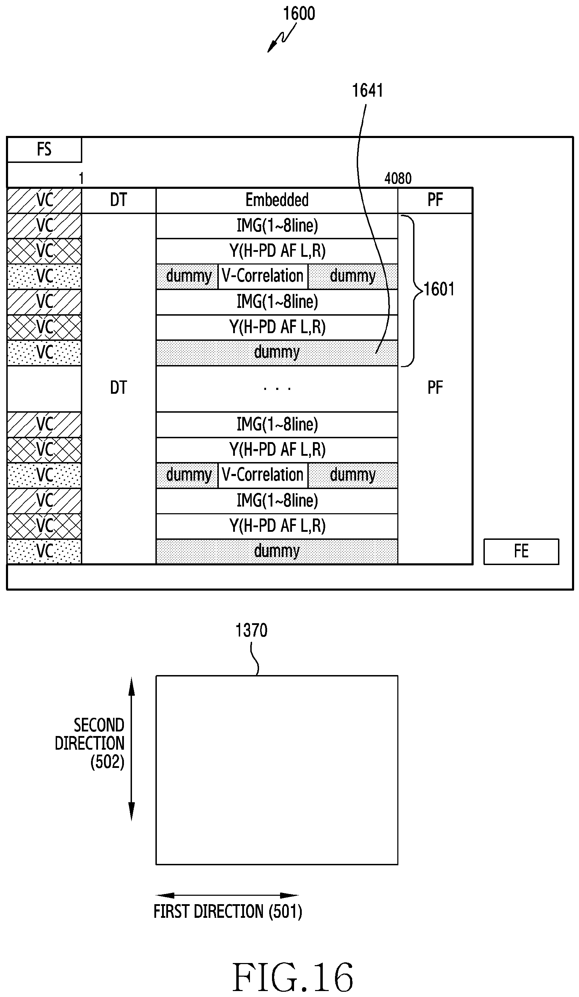

FIG. 16 is a diagram conceptually illustrating a structure of a data frame 1600 in which an image sensor (e.g., the image sensor 230 of FIG. 2 and FIG. 3) inserts dummy data based on a binning calculation of a second direction 502 in addition to an area related to the case shown in FIG. 14 according to an embodiment. In particular, FIG. 16 relates to a case in which the image 1370 is cropped in the first direction 501 and the binning calculation is further performed in the second direction 502 as shown in FIG. 13.

In an embodiment, the image sensor (e.g., the image sensor 230 of FIG. 2 and FIG. 3) may output the image frame 1600 with dummy data 1641 added thereto, similar to that shown in FIG. 15. If the binning calculation is performed on the pixels of the second direction 502, lines having no correlation data are repeated and accordingly the form of a set 1601 of lines shown in FIG. 16 may be repeatedly included within the data frame 1600.

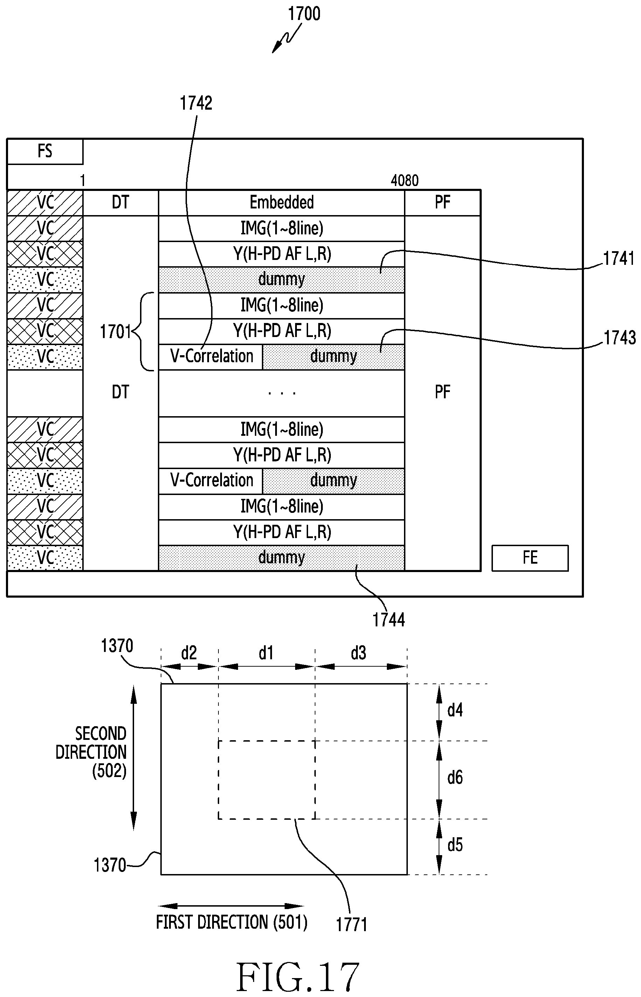

FIG. 17 is a diagram conceptually illustrating a structure of a data frame 1700 in which an image sensor (e.g., the image sensor 230 of FIG. 2 and FIG. 3) inserts dummy data based on an area 1771 cropped further in a second direction 502 in addition to the example shown in FIG. 13 according to an embodiment.

In an embodiment, the image sensor (e.g., the image sensor 230 of FIG. 2 and FIG. 3) may output the data frame 1700 including dummy data 1741 and 1744 corresponding to the width of the second direction 502 not included in the cropped area 1771 (e.g., an ROI) in the second direction 502.

Referring to the example shown in FIG. 17, the image sensor (e.g., the image sensor 230 of FIG. 2 and FIG. 3) may output the data frame 1700 for the ROI 1771 obtained by cropping areas corresponding to the width d2 and the width d3 excluding the width d1 in the first direction 501, and areas corresponding to a width d4 and a width d6 excluding a width d6 within the image 1370. The data frame 1700 may include dummy data 1741 for the area corresponding to the width d4 in the second direction 502 not included in the cropped area 1771 as data of the virtual channel for outputting the phase data. A data line corresponding to the virtual channel for outputting the phase data for the width d6 of the second direction 502 within the data frame 1700 may include correlation data 1742 of the second direction 502 and dummy data 1743. The correlation data 1742 may include correlation information of the second direction 502 for the area 1771 included in the width d1 in the first direction 501 and included in the width d6 in the second direction 502. The dummy data 1743 may be for the areas corresponding to the width d2 and the width d3 excluded from the cropped area 1771.

In the example shown in FIG. 17, data for the area corresponding to the width d6 may be outputted in the form of the data line set 1701 of FIG. 17. In addition, the data frame 1700 may include dummy data 1744 for the area corresponding to the width d5 of the second direction 502 not included in the cropped area 1771 as the data of the virtual channel for outputting the phase data.

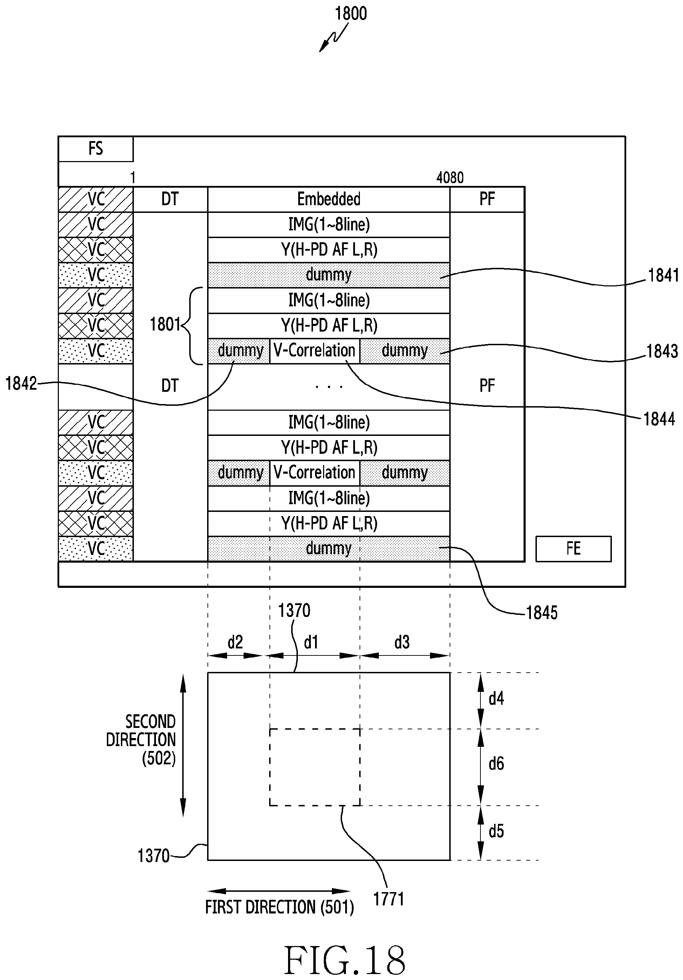

FIG. 18 is a diagram conceptually illustrating a structure of a data frame 1800 in which an image sensor (e.g., the image sensor 230 of FIG. 2 and FIG. 3) inserts dummy data based on an area further cropped in a second direction 502 in addition to the example shown in FIG. 14 according to an embodiment.

In an embodiment, the image sensor (e.g., the image sensor 230 of FIG. 2 and FIG. 3) may output the data frame 1800 including dummy data 1841 and 1845 corresponding to the width of the second direction 502 not included in the cropped area 1771 in the second direction 502.

Referring to the example shown in FIG. 18, the image sensor (e.g., the image sensor 230 of FIG. 2 and FIG. 3) may output the data frame 1800 for the area 1771 obtained by cropping areas corresponding to the width d2 and width d3 excluding the width d1 in the first direction 501, and areas corresponding to the width d4 and the width d5 excluding the width d6 within the image 1370. The data frame 1800 may include the dummy data 1841 for the area corresponding to the width d4 of the second direction not included in the cropped area 1771 as data of the virtual channel for outputting phase data. A data line corresponding to the virtual channel for outputting the phase data for the width d6 of the second direction 502 within the data frame 1800 may include correlation data 1844 and dummy data 1842 and 1843 in the second direction 502. The correlation data 1844 may include correlation information of the second direction 502 for the area 1771 included in the width d1 of the first direction 501 and included in the width d6 of the second direction 502. The dummy data 1842 may be for the area corresponding to the width d2 excluded from the cropped area 1771. The dummy data 1843 may be for the area corresponding to the width d3 excluded from the cropped area 1771.

In the example shown in FIG. 18, data for the area corresponding to the width d6 may be outputted in the form of a data line set 1801 of FIG. 18. In addition, the data frame 1800 may include the dummy data 1845 for the area corresponding to the width d5 of the second direction 502 not included in the cropped area 1771 as the data of the virtual channel for outputting the phase data.

The above-described embodiments are not combined inseparably, and various combinations are possible. For example, the image sensor (e.g., the image sensor 230 of FIG. 2 and FIG. 3) may output an image frame based on a result of combining the area cropping in the first direction 501 and the area cropping in the second direction 502. As another example, the image sensor (e.g., the image sensor 230 of FIG. 2 and FIG. 3) may also output an image frame based on a result of combining the binning calculation performed in the first direction and the area cropping in the second direction 502.

Since a processor (e.g., an application processor) receives an output of an image sensor and performs image processing, an electronic device including an image sensor may obtain a desired image. For the processor to process data outputted from the image sensor, the data outputted from the image sensor must satisfy a format processible by the processor.

An image sensor may output data based on a plurality of operation modes depending on its configuration. In addition, since the processor such as an application processor has high development difficulty and requires a long development time, a new function is often implemented in the image sensor to implement the new function. For example, the image sensor may calculate and output phase difference information for implementing the phase difference AF.

However, if the operation mode of the image sensor changes or the calculation result is outputted, the position or the size of the output data may change dynamically. If the position or the size of the data outputted from the image sensor changes dynamically, the processor for receiving and processing the data may not operate normally.

The technical problems to be achieved in this document are not limited to the technical problems mentioned above, and other technical problems not mentioned may be clearly understood by a person having ordinary skill in the technical field to which the disclosure belongs from the description of this disclosure.

In an embodiment, an electronic device (e.g., the electronic device 101 of FIGS. 1 and 3) may include an image sensor (e.g., the image sensor 230 of FIGS. 2 and 3) converting an optical signal into a digital signal, memory (e.g., the memory 130 of FIG. 1) storing instructions, and at least one processor (e.g., the processor 120 of FIG. 1, the image signal processor 260 of FIGS. 2 and 3). The image sensor (e.g., the image sensor 230 of FIGS. 2 and 3) may include a plurality of micro lenses (e.g., the micro lens array 411 of FIG. 4), a plurality of light receiving elements (e.g., the light receiving unit 415 of FIG. 4) converting light received through each of the plurality of micro lenses (e.g., the micro lens array 411 of FIG. 4) into electrical signals, a calculation unit configured to calculate phase data including at least one of first phase information of a first direction or second phase information of a second direction which is different from the first direction based on the electrical signal obtained through the plurality of light receiving elements (e.g., the light receiving unit 415 of FIG. 4), and an interface configured to output phase data including at least one of an image signal obtained through at least one of the light receiving element (e.g., the light receiving unit 415 of FIG. 4) and the calculation unit, the first phase information or the second phase information. The at least one processor (e.g., the processor 120 of FIG. 1, the image signal processor 260 of FIGS. 2 and 3) may be configured to, when executing the instructions, control the image sensor (e.g., the image sensor 230 of FIGS. 2 and 3) to output the phase data including first phase data of a first size through the interface in a format having a second size while operating based on a first mode. The at least one processor may be configured to, when executing the instructions, control the image sensor (e.g., the image sensor 230 of FIGS. 2 and 3) to output the phase data including second phase data of a third size and dummy data through the interface in a format having the second size while operating based on a second mode which is different from the first mode.

In an embodiment, it may be arranged to correspond to one micro lens of the plurality of micro lenses (e.g., the micro lens array 411 of FIG. 4). The M and the N each may be natural numbers greater than or equal to 2.

In an embodiment, the first phase information may include first luminance information and second luminance information related to a phase difference of the first direction. The second phase information may include vertical correlation information obtained by performing a correlation calculation on third luminance information and fourth luminance information related to a phase difference of the second direction which is different from the first direction.

In an embodiment, the image sensor (e.g., the image sensor 230 of FIGS. 2 and 3) may be configured to maintain a state of outputting an image data stream while switching from the first mode to the second mode.

In an embodiment, the image sensor (e.g., the image sensor 230 of FIGS. 2 and 3) may be configured to output image data acquired through the light receiving element in a line unit. The second size may correspond to a maximum value of a length of data contained in the line unit.

In an embodiment, the first mode may be an operation mode for outputting image data based on a first resolution. The second mode may be an operation mode for cropping an image of a second resolution and outputting image data of the first resolution.

In an embodiment, the image sensor (e.g., the image sensor 230 of FIGS. 2 and 3) may operate while deactivating an operation of a phase detection processing chain which calculates the phase data while operating based on the second mode. The image sensor (e.g., the image sensor 230 of FIGS. 2 and 3) may be configured to output dummy data of the second size while the phase detection processing chain is turned off.

According to an embodiment, the image sensor (e.g., the image sensor 230 of FIGS. 2 and 3) may be configured to allow the image sensor (e.g., the image sensor 230 of FIGS. 2 and 3) to acquire the first phase data for a first area having a first width in the first direction within the image data in the first mode. The image sensor (e.g., the image sensor 230 of FIGS. 2 and 3) may be configured to allow the image sensor (e.g., the image sensor 230 of FIGS. 2 and 3) to acquire the second phase data for a second area having a second width in the first direction within the image data in the second mode. The second width may be shorter than the first width (e.g., the width d1 of FIG. 13 and FIG. 14). The second phase data may further include dummy data of a size corresponding to a difference between the first width (e.g., the width d1 of FIG. 13 and FIG. 14) and the second width compared to the first phase data.

In an embodiment, the image sensor (e.g., the image sensor 230 of FIGS. 2 and 3) may be configured to allow the image sensor (e.g., the image sensor 230 of FIGS. 2 and 3) to acquire the first phase data for a third area having a third width in the second direction within the image data in the first mode. The image sensor (e.g., the image sensor 230 of FIGS. 2 and 3) may be configured to allow the image sensor (e.g., the image sensor 230 of FIGS. 2 and 3) to acquire the second phase data for a fourth area having a fourth width in the second direction within the image data in the second mode. The fourth width may be shorter than the third width. The second phase data may include at least one line including dummy data.

In an embodiment, the image sensor (e.g., the image sensor 230 of FIGS. 2 and 3) may be configured to perform a binning calculation for adding up charges corresponding to values of adjacent pixels in the second mode compared to the first mode. The dummy data may correspond to a pixel reduced by the binning operation in the second mode.

In an embodiment, an operating method of an electronic device (e.g., the electronic device 101 of FIGS. 1 and 3) including an image sensor (e.g., the image sensor 230 of FIGS. 2 and 3) which outputs phase data including at least one of first phase information of a first direction or second phase information of a second direction different from the first direction, may include controlling the image sensor (e.g., the image sensor 230 of FIGS. 2 and 3) to output the phase data including first phase data of a first size in a format having a second size while operating based on a first mode. The method may include controlling the image sensor (e.g., the image sensor 230 of FIGS. 2 and 3) to output the phase data including second phase data of a third size and dummy data in a format having a second size while operating based on a second mode which is different from the first mode.

In an embodiment, the image sensor (e.g., the image sensor 230 of FIGS. 2 and 3) may include a plurality of micro lenses (e.g., the micro lens array 411 of FIG. 4), and M x N light receiving elements (e.g., the light receiving unit 415 of FIG. 4) disposed to correspond to one of the plurality of micro lenses (e.g., the micro lens array 411 of FIG. 4). The M and the N each may be natural numbers greater than or equal to 2.

In an embodiment, the first phase information may include first luminance information and second luminance information related to a phase difference of the first direction. The second phase information may include vertical correlation information obtained by performing a correlation calculation on third luminance information and fourth luminance information related to a phase difference of the second direction which is different from the first direction.

In an embodiment, the method may further include maintaining a state in which the image sensor (e.g., the image sensor 230 of FIGS. 2 and 3) outputs an image data stream while switching from the first mode to the second mode.

In an embodiment, the second size may corresponding to a maximum value of the phase data outputted as a single line.

In an embodiment, the first mode may be an operation mode for outputting image data based on a first resolution. The second mode may be an operation mode for cropping an image of a second resolution and outputting image data of the first resolution.

In an embodiment, controlling to output the phase data while the image sensor (e.g., the image sensor 230 of FIGS. 2 and 3) operates based on the second mode may include deactivating an operation of a phase detection processing chain which calculates the phase data, and outputting an image frame including dummy data of the second size while the phase detection processing chain is deactivated.

In an embodiment, controlling to output the phase data including the first phase data in the second size while operating based on the first mode may include acquiring at the image sensor (e.g., the image sensor 230 of FIGS. 2 and 3) the first phase data for a first area having a first width (e.g., the width d1 of FIGS. 13 and 14) in the first direction within the image data. Controlling to output the phase data including the second phase data and the dummy data in the second size while operating based on the second mode may include acquiring at the image sensor (e.g., the image sensor 230 of FIGS. 2 and 3) the second phase data for a second area having a second width in the first direction within the image data. The second width is shorter than the first width (e.g., the width d1 of FIGS. 13 and 14). The second phase data may further include dummy data having a size corresponding to a difference between the first width (e.g., the width d1 of FIGS. 13 and 14) and the second width compared to the first phase data.

In an embodiment, controlling to output the phase data including the first phase data in the second size while operating based on the first mode may include acquiring at the image sensor (e.g., the image sensor 230 of FIGS. 2 and 3) the first phase data for a third area having a third width in the second direction within the image data. Controlling to output the phase data including the second phase data and the dummy data in the second size while operating based on the second mode may include acquiring at the image sensor (e.g., the image sensor 230 of FIGS. 2 and 3) the second phase data for a fourth area having a fourth width in the second direction within the image data. The fourth width is shorter than the third width. The second phase data may include at least one line including dummy data.

In an embodiment, a computer-readable non-transitory recording medium may record a computer program for executing the method described above.

In an embodiment, an image sensor (e.g., the image sensor 230 of FIGS. 2 and 3) may include a plurality of micro lenses (e.g., the micro lens array 411 of FIG. 4), a plurality of light receiving elements (e.g., the light receiving unit 415 of FIG. 4) converting light received through each of the plurality of micro lenses (e.g., the micro lens array 411 of FIG. 4) into electrical signals, a calculation unit configured to calculate phase data including at least one of first phase information of a first direction or second phase information of a second direction which is different from the first direction based on the electrical signal obtained through the plurality of light receiving elements (e.g., the light receiving unit 415 of FIG. 4), and an interface configured to output phase data including at least one of an image signal obtained through at least one of the light receiving element (e.g., the light receiving unit 415 of FIG. 4) and the calculation unit (e.g., the calculation unit 417 of FIG. 4), the first phase information or the second phase information. The calculation unit (e.g., the calculation unit 417 of FIG. 4) may be configured to output the phase data by adding dummy data corresponding to a reduced size, when the size of at least one of the first phase information or the second phase information contained in the phase data is reduced after an operation mode related to an operation of the image sensor is changed.

In an embodiment, the first direction 501 may correspond to a horizontal direction with respect to the image sensor (e.g., the image sensor 230 of FIGS. 2 and 3), and the second direction 502 may correspond to a vertical direction with respect to the image sensor (e.g., the image sensor 230 of FIGS. 2 and 3). The calculation unit (e.g., the calculation unit 417 of FIG. 4) may be configured to acquire the second phase information through a correlation calculation on an output value of the light receiving element.

According to various embodiments, an image sensor for outputting at least one of phase difference related data of a horizontal direction or phase difference related data of a vertical direction, an electronic device including the image sensor, and an operating method thereof may be provided.

According to various embodiments, an image sensor for outputting correlation information for phase difference related data of a vertical direction, an electronic device including the image sensor, and an operating method thereof may be provided.

According to various embodiments, an image sensor for allowing a processor which performs image signal processing to operate independently even if an operation mode changes, an electronic device including the image sensor, and an operating method thereof may be provided. According to various embodiments, an image sensor for allowing to process phase difference related data even if a processor is changed, an electronic device including the image sensor, and an operating method thereof may be provided.

Effects obtainable from the disclosure are not limited to the above-mentioned effects, and other effects which are not mentioned may be clearly understood by those skilled in the art of the disclosure through the following descriptions.

The methods according to the embodiments described in the claims or the specification of the disclosure may be implemented in software, hardware, or a combination of hardware and software.

In software implementation, a computer-readable storage medium storing one or more programs (software modules) may be provided. One or more programs stored in the computer-readable storage medium may be configured for execution by one or more processors of an electronic device. One or more programs may include instructions for controlling an electronic device to execute the methods according to the embodiments described in the claims or the specification of the disclosure.

Such a program (software module, software) may be stored to a random access memory, a non-volatile memory including a flash memory, a read only memory (ROM), an electrically erasable programmable ROM (EEPROM), a magnetic disc storage device, a CD-ROM, digital versatile discs (DVDs) or other optical storage devices, and a magnetic cassette. Alternatively, it may be stored to a memory combining part or all of them. In addition, a plurality of memories may be included.

Also, the program may be stored in an attachable storage device accessible via a communication network such as internet, intranet, local area network (LAN), wide LAN (WLAN), or storage area network (SAN), or a communication network by combining these networks. Such a storage device may access a device which executes an embodiment of the disclosure through an external port. In addition, a separate storage device on the communication network may access the device which executes an embodiment of the disclosure.

In the specific embodiments of the disclosure, the component included in the disclosure is expressed in a singular or plural form. However, the singular or plural expression is appropriately selected according to a proposed situation for the convenience of explanation, the disclosure is not limited to a single component or a plurality of components, the components expressed in the plural form may be configured as a single component, and the components expressed in the singular form may be configured as a plurality of components.

In addition, a term such as "unit" or "module" in the disclosure may be a hardware component such as a processor or a circuit, and/or a software component executed by a hardware component such as a processor.

"unit" and "module" may be stored in an addressable storage medium and implemented by a program executable by the processor. For example, "unit" and "module" may be implemented by components such as software components, object-oriented software components, class components and task components, processes, functions, attributes, procedures, sub-routines, segments of program code, drivers, firmware, microcode, circuitry, data, databases, data structures, tables, arrays and variables.

Specific implementations described in this disclosure are merely embodiments, and are not intended to limit the scope of the disclosure in any way. For the sake of brevity of the specification, disclosure of conventional electronic configurations, control systems, software, and other functional aspects of the systems may be omitted.

In addition, in the disclosure, "including at least one of a, b, or c" may indicate "including a alone, including b alone, including c alone, including a and b, including b and c, including a and c, or including all of a, b, and c".

Meanwhile, while the specific embodiment has been described in the detailed explanation of the disclosure, it will be noted that various modifications may be made without departing from the scope of the disclosure. Therefore, the scope of the disclosure is not limited and defined by the described embodiment and is defined by not only the scope of the claims as below but also their equivalents.

## Claims

1. An electronic device comprising:
an image sensor converting an optical signal into a digital signal;
memory storing instructions; and
at least one processor,
wherein the image sensor comprises:
a plurality of micro lenses,
a plurality of light receiving elements converting light received through each of the plurality of micro lenses into electrical signals,
a calculation unit configured to calculate phase data comprising at least one of first phase information of a first direction or second phase information of a second direction which is different from the first direction based on the electrical signal obtained through the plurality of light receiving elements, and
an interface configured to output phase data comprising at least one of an image signal obtained through at least one of the plurality of light receiving elements or the calculation unit, the first phase information or the second phase information,
wherein the instructions are executed by the at least one processor, to cause the electronic device to:
control the image sensor to output the phase data comprising first phase data of a first size through the interface in a format having a second size while operating based on a first mode, and
control the image sensor to output the phase data comprising second phase data of a third size and dummy data through the interface in a format having the second size while operating based on a second mode which is different from the first mode,
wherein the third size is smaller than the first size.

2. The electronic device of claim 1,
wherein the plurality of light receiving elements is arranged such that M x N light receiving elements correspond to one micro lens among the plurality of micro lenses, and
the M and the N each are natural numbers greater than or equal to 2.

3. The electronic device of claim 1,
wherein the first phase information comprises first luminance information and second luminance information related to a phase difference of the first direction, and
the second phase information comprises vertical correlation information obtained by performing a correlation calculation on third luminance information and fourth luminance information related to a phase difference of the second direction which is different from the first direction.

4. The electronic device of claim 1, wherein the image sensor is configured to maintain a state of outputting an image data stream while switching from the first mode to the second mode.

5. The electronic device of claim 1,
wherein the image sensor outputs image data acquired through the light receiving element in a line unit, and
the second size corresponds to a maximum value of a length of data contained in the line unit.

6. The electronic device of claim 1,
wherein the first mode is an operation mode for outputting image data based on a first resolution, and
the second mode is an operation mode for cropping an image of a second resolution and outputting image data of the first resolution.

7. The electronic device of claim 1, wherein the image sensor is configured to operate while deactivating an operation of a phase detection processing chain which calculates the phase data while operating based on the second mode, and
to output dummy data of the second size while the phase detection processing chain is turned off.

8. The electronic device of claim 1,
wherein the image sensor is configured to:
allow the image sensor to acquire the first phase data for a first area having a first width in the first direction within the image data in the first mode, and
allow the image sensor to acquire the second phase data for a second area having a second width in the first direction within the image data in the second mode,
the second width is shorter than the first width, and
the second phase data further comprises dummy data of a size corresponding to a difference between the first width and the second width compared to the first phase data.

9. The electronic device of claim 1,
wherein the image sensor is configured to:
allow the image sensor to acquire the first phase data for a third area having a third width in the second direction within the image data in the first mode, and
allow the image sensor to acquire the second phase data for a fourth area having a fourth width in the second direction within the image data in the second mode,
the fourth width is shorter than the third width, and
the second phase data comprises at least one line comprising dummy data.

10. The electronic device of claim 1,
wherein the image sensor performs a binning calculation for adding up charges corresponding to values of adjacent pixels in the second mode compared to the first mode, and
the dummy data corresponds to a pixel reduced by the binning operation in the second mode.

11. A method of operating an electronic device comprising an image sensor which outputs phase data comprising at least one of first phase information of a first direction or second phase information of a second direction different from the first direction, the method comprising:
controlling the image sensor to output the phase data comprising first phase data of a first size in a format having a second size while operating based on a first mode; and
controlling the image sensor to output the phase data comprising second phase data of a third size and dummy data in a format having a second size while operating based on a second mode which is different from the first mode,
wherein the third size is smaller than the first size.

12. The method of claim 11,
wherein the image sensor comprises:
a plurality of micro lenses; and
M x N light receiving elements disposed to correspond to one of the plurality of micro lenses, and
the M and the N each are natural numbers greater than or equal to 2.

13. The method of claim 11,
wherein the first phase information comprises first luminance information and second luminance information related to a phase difference of the first direction, and
the second phase information comprises vertical correlation information obtained by performing a correlation calculation on third luminance information and fourth luminance information related to a phase difference of the second direction which is different from the first direction.

14. The method of claim 11, wherein the second size corresponds to a maximum value of a size of the phase data outputted as a single line.

15. The method of claim 11,
wherein the controlling to output the phase data comprising the first phase data in the second size while operating based on the first mode comprises acquiring at the image sensor the first phase data for a first area having a first width in the first direction within image data,
wherein the controlling to output the phase data comprising the second phase data and the dummy data in the second size while operating based on the second mode comprises acquiring at the image sensor the second phase data for a second area having a second width in the first direction within the image data,
the second width is shorter than the first width, and
the second phase data further comprises dummy data having a size corresponding to a difference between the first width and the second width compared to the first phase data.
